# EUROPEAN PATENT SPECIFICATION

(11) **EP 1 342 845 B1**
(45) Date of publication and mention of the grant of the patent: **19.12.2007**
(21) Application number: 03004834.2
(22) Date of filing: 05.03.2003
(51) Int. Cl.: D21H 21/28

(54) **Multi-ply tissue paper product**
Mehrschichtiges Tissuepapier
Papier tissu a couches multiples

(30) Priority: 06.03.2002 GB 0205270
(43) Date of publication of application: 10.09.2003
(73) Proprietor: SCA Hygiene Products GmbH, 68305 Mannheim (DE)
(72) Inventor: Hein, Ferdinand, 68305 Mannheim (DE); Harlacher, Harald, 68307 Mannheim (DE); Leonhardt, Joachim, 68163 Mannheim (DE)
(74) Representative: HOFFMANN EITLE

(56) References cited:
- WO-A-02/27098
- WO-A-89/02952
- WO-A-96/20310
- GB-A- 2 126 258
- US-A- 3 377 235
- US-A- 4 402 703
- US-A- 5 830 317

## Description

### Technical Field

The technical field to which the invention relates is the field of tissue paper products, especially multi-ply tissue paper products in which the plies are tissue paper webs being manufactured on a tissue paper making machine using cellulose fibres. Such tissue paper products include kitchen towels, napkins, toilet paper, etc. In particular, the invention relates to such products comprising external plies of different functionality. It is possible to mark fibres having as such a special property or function and being located within the fibre composite as special fibres. In such a case, not necessarily the product has to have plies of special or different functionality, because this special functionality is fulfilled by the special fibres being probably coloured or having another colour than the other fibres.

### Background Art

From WO 96/20310 A1 a process of manufacture is known for a coloured fibre material, containing a certain proportion of cellulose fibres, such as paper and nonwoven, and a coloured fibre material manufactured according to the process. In particular, a dyestuff is applied onto reel or sheet pulp either on the whole material or only on part of it, whereupon the reel or sheet pulp is defibrated and dispersed in liquid or foam possibly together with other fibres. The fibre dispersion is thereafter applied onto a wire and dewatered, whereupon the formed fibre web, which contains a substantially even addition of coloured fibres, is subjected to possible further treatment steps before drying and reeling. In a corresponding fibre material a mottled colour impression of the material is obtained, if only part of the pulp fibres are coloured. Such mottled colouring is preferable for aesthetic reasons, since mottling is more associated with textiles than with paper.

From WO02/27098 A1 being a not pre-published prior art document it is known a method of and apparatus for producing a printed ink pattern on a tissue product. The printing process is effected at the same time as embossing of the tissue product is made so that there is perfect correlation between the printed and embossed patterns. It is realized a so-called colored embossing, in which the printing and embossing steps are performed simultaneously.

WO98/0294252 relates to a paper pulp for manufacturing paper. The fibers in the pulp are colored by means of a coloring agent added to the fibers. This means that all the fibers are colored. In claim 6 is described that two or more paper pulps can be used, at least one of which is colored while the other is uncolored and differently colored so as to produce a paper of veined structure.

Known from WO96/20310 is a process for manufacturing colored fiber material such as paper to give a mottled impression.

### Disclosure of invention

It is the problem (object) of the invention to provide a multi-ply tissue paper product having a multi-functionality with an identification system which is easily recognisable and which does not adversely affect the product.

This problem is solved by a multi-ply tissue paper product comprising at least two ply-bonded plies of tissue paper, according to the present claim 1. These coloured fibres act as an identification system indicating the function of at least one external ply of the product. Such a function for one external ply may be softness and liquid absorption, and for the other external ply a robust surface for rubbing. This is achievable by using different kinds of tissue paper or by using special modes of manufacture. It is not necessary to colour the complete surface of the plies or all the fibres therein. Using coloured fibres for identification has no adverse effects on the properties of the plies of the product nor on the product itself. The presence of coloured fibres within the plies can be achieved in a simple, quick and cheap manner, especially as it is not necessary to provide means for colouring in connection with converting the tissue paper to a tissue paper product. Only a small amount of fibres need to be coloured. Using coloured fibres for distinguishing between different functions does not affect the general characteristics of the product nor its physical values. However, it is possible to improve the physical properties of the tissue paper. For example, by using long coloured fibres the ply strength can be increased, and subsequently the tissue paper product. Normal lengths of pulp fibres are 1,2 to 3,0mm, with recycled or reject fibres possibly even shorter. Synthetic staple fibres can be of any length, but possible to use here would be 3 to 6 to 10mm. These can be cellulosic (rayon or viscose) and coloured according to the invention. The web forming is difficult with long fibres, which tend to form "knots", that is why foam forming is often used for longer fibres. Long means more than 6mm, or 10mm.

The coloured fibres may be fibres improving the properties of the product. Dependent on the type of fibre, different properties can be improved, e.g. fibres for increasing strength, for increasing liquid absorbency, for increasing surface roughness to improve the cleaning result and for increasing softness. Such fibres possessing a special function within the fibre composite or improving the special property or functionality are recognisable by the consumer due to colouring such that the concept of the product is more effective. Dependent on the type of fibre, simultaneously a different optical effect is achievable.

The following products are within the scope:
- A product comprising an external ply containing coloured or non-white additional fibres in order to have the possibility to differentiate external plies having different functionality or property. The coloured fibres in such a case are usually not different from the main fibres in this ply. (Alternatively, both external plies may contain coloured fibres. These are in such a case differently coloured in order to ensure a differentiation).
- Colouring and admixing fibres being different from the main content of the used fibres. Those fibres have an influence on the special properties of the tissue (functional fibres). In this case, not only the plies of the product having special functions may be marked, but the fibres as well giving the functional ply the special property.
- A product with functional fibres in both external plies. In this case, the functional fibres mark the special properties of the product.
- The use of coloured fibres within the tissue ply, wherein the white and not the coloured fibres are responsible for the special product or ply property.

Different optical effects can be achieved by using coloured fibres within the plies. These are dependent on the type, concentration (density) and colour of the fibres.

It is preferable that the coloured fibres of each external ply are different so that each colour signifies a particular function. However, even if the coloured fibres within the external plies use the same dyestuff, a distinction can still be achieved by using more coloured fibres in the one external ply than in the other external ply.

If the coloured fibres are reject or recycled fibres, it is not necessary to provide colouring as an extra step. Such reject fibres are off-white and contrast with the main fibres of an external ply when white. Unbleached fibres can also be used as coloured fibres. If uncoloured fibres are used being reject or recycled fibres or unbleached fibres, it is possible to avoid chemical intensive and waste water critical bleaching.

When using reject fibres or recycled fibres, reject or recycled paper can be used, which results from the production of a coloured product. Then, bleaching and colouring is totally avoidable.

The coloured fibres may be of the same type or differ from the main uncoloured fibres.

The problem is furthermore solved by a method for manufacturing a multi-ply tissue paper product as described above. Such a method comprises the steps of colouring fibres by admixing a dyestuff to a mass of fibres and by admixing some of these coloured fibres to the fibre suspension to be fed into a tissue paper making machine. A thus produced paper for one ply is combined with at least one further coloured or uncoloured ply in a converting machine.

This is a very simple and effective method.

The dyestuff should have a strong affinity to cellulose so as to fix it to the pulp fibres without spreading or bleeding into the water. Conventional cationic direct dyes, normally used for colouring paper, are excellent for this purpose. However, other dyestuffs may also be used by bonding them to the pulp fibres by means of a binder. No adverse effect is caused to the water circuit of the tissue paper making machines provided no bleeding occurs. This is also made less likely due to the fact that only part of the fibres are coloured. Also, the product itself will be non-bleeding which is good for wiping hands, faces, table tops or other objects.

Preferably, the coloured fibres are filtered before being admixed to the fibre suspension.

The problem is furthermore solved by use of coloured fibres added to the main fibres of at least one of the external plies of a multi-ply tissue paper product for visually indicating a ply of special functionality if plies of different functionality are present in the product.

### Brief description of the drawings

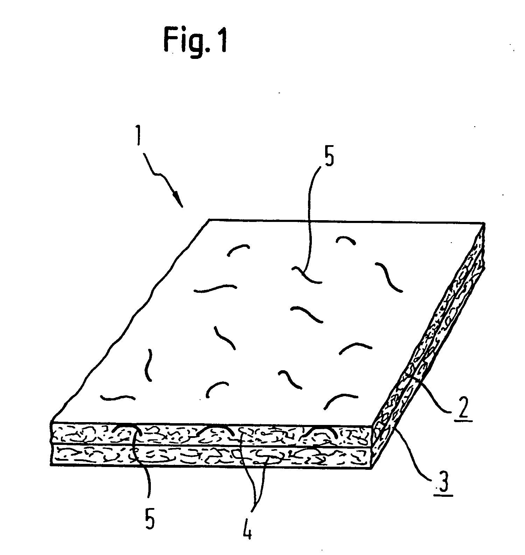

A section of a multi-ply tissue product is illustrated in Fig. 1.

### Embodiments of invention

Fig. 1 shows a section of a multi-ply tissue product, for instance showing a section of a kitchen towel. The product, as illustrated in Fig. 1, is made as a laminate of two plies 2, 3 of tissue paper being made of cellulose fibres and typically manufactured on a tissue paper making machine. Normally, the two plies 2, 3 are combined by usual ply-bonding. Each ply 2, 3 consists inter alia of mainly cellulose main fibres 4. Here, within ply 2, uncoloured main fibres 4 are admixed to coloured fibres 5 appearing on the external surface of the plies 2, 3, each being an external ply. The laminate could be three-ply, but only two plies of which can be external plies, these being visible and coming into contact with the surface to be cleaned or to be treated.

The coloured fibres 5 can be admixed so as to produce a mottled colouring on the external surface of the plies. With such a mottled colouring, a distinction between the different functions of the plies is made clearly visible. Only a small part of the fibres need to be coloured in order to achieve this purpose. The coloured fibres 5 may be the same or different fibres than the main fibres 4. A mottled colouring can be achieved by admixing different shaped and/or different coloured fibres, thus producing a plurality of optical effects. These effects are different depending on the type, concentration (density) and colour of the fibres.

Such a tissue paper product, especially kitchen towels or household towels, is made of plies 2, 3 for fulfilling different functions. For instance, ply 2 is soft and has good water absorption, whereas ply 3 is used for rubbing a surface. Thus, both have different properties. Besides a kitchen towel, a facial may also be a product having a different functionality. One external ply is designed for wiping off make-up from the face and the other external ply is for wiping one's nose. For instance, a toilet paper may have a so-called "safe" side and a "soft side''. This may be achieved by using different tissue papers or by using a special mode of manufacture. By using coloured fibres 5, it is not necessary to achieve a differentiation between the plies by using different materials, haptic, different embossings or special prints. To create a difference in the haptic would lead to an unpleasant textile character.

No adverse effects on tissue-converting of the tissue paper are caused when using coloured fibres for identification purposes.

Preferably, a small amount of separately coloured fibres are added in a controlled manner to a fibre suspension to be fed to the tissue paper making machine, e.g. 0,3%, 3%, 6% or 12%.

The ratio of main fibres to coloured fibres can be altered depending on the colour intensity required. Different cellulose fibres and different fibre mixtures can be used as coloured fibres.

It is not necessary to describe in detail how to manufacture tissue paper having different properties nor how to colour fibres. This is generally known in the art. Here are some examples:

In order to achieve a product comprising partly differently coloured fibres, the following possibilities consist:
- Disintegrating and admixing (metered adding) of coloured cellulosic chemical pulp.
- Feeding a portion of fibre dispersion flowing to the head box of a paper making machine into a tub or vat for colouring and then re-feeding the coloured portion of fibre suspension to the tissue production line.
- Metered admixing colour to a portion of fibre suspension flowing to the head box of a paper making machine.
- In a paper making machine having a multi-layer head box admixing the non-white fibres only to one layer.
- For tissue products the paper making machine is a tissue paper making machine.

Fibre pulp to be coloured is poured into a separate mixing container, to which the necessary and intended amount of dyestuff is to be admixed. The dyestuff to be used must have a strong affinity to cellulose and must be water insoluble so that it does not bleed into the water. Conventional cationic direct dyes, normally used for colouring paper, serve this purpose well. Other dyes can also be used such that they are bound to the pulp fibres by a binder.

According to a further step, the coloured fibres are filtered to get rid of the remains from the dyeing/colouring process steps. The coloured fibres can be added in a wet or dry state and then can be mixed with the main fibre suspension. Thereafter, this mass is fed together with process water to the tissue paper making machine. There, the paper for at least one of the plies of the multi-ply product is manufactured. Said multi-ply product is made in a so-called converting machine.

When colouring fibres, the amount of dyestuff should be admixed in such a metered manner so that the share of unbonded rest dyestuff in the water is a minimum. Alternatively, it is possible to wash a coloured fibre suspension and therewith remove the unbonded rest dyestuff. The coloured fibres fed to the process of paper production then do not contain rest dyestuff in the transporting water and therefore the water circuit of the paper making machine is not burdened with dyestuff.

## Claims

1. Multi-ply tissue paper product comprising at least two ply-bonded plies of tissue paper, wherein a first external ply is produced in a different manner or by using different tissue paper than the second external ply to obtain a different property compared to the second external ply so that the tissue product may be used for different purposes, said plies containing cellulose fibres, wherein within at least one of the external plies a part of the fibres is coloured.

2. Multi-ply tissue paper product according to claim 1, wherein each external ply has different coloured fibres.

3. Multi-ply tissue paper product according to claim 1 or 2, wherein within both external plies coloured fibres are present being coloured with the same dyestuff and within one of the external plies more of the coloured fibres are present than within the other external ply.

4. Multi-ply tissue paper product according to claim 1, where the coloured fibres are reject or recycled fibres.

5. Multi-ply tissue paper product according to claim 1, wherein the coloured fibres are long fibres, such as long as in the range of more than 6mm or 10mm.

6. Multi-ply tissue paper product according to claim 1, wherein the coloured fibres are the same or different kinds of fibre as the main fibres.

7. Multi-ply tissue paper product according to claim 1, wherein the coloured fibres are unbleached fibres.

8. Method for manufacturing multi-ply tissue paper product according to claim 1, the method comprising the steps of:
- colouring fibres by admixing dyestuff to a mass of fibres,
- admixing some of these coloured fibres to the fibre suspension to be fed to a tissue paper making machine.
- making one paper ply in the papermaking machine and
- combining this coloured paper ply with another paper ply in a converting machine, wherein the plies are produced in a different manner or different tissue papers are used.

## Patentansprüche

1. Mehrlagiges Tissuepapierprodukt umfassend wenigstens zwei lagenverbundene Lagen aus Tissuepapier, wobei eine erste Außenlage auf andere Art und Weise oder unter Verwendung eines anderen Tissuepapiers als die zweite Außenlage hergestellt ist, um eine andere Eigenschaft verglichen mit der zweiten Außenlage zu erzielen, so dass das Tissueprodukt für unterschiedliche Zwecke verwendet werden kann, wobei die Lagen Cellulosefasern enthalten, wobei in wenigstens einer Außenlage ein Teil der Fasern gefärbt ist.

2. Mehrlagiges Tissuepapierprodukt nach Anspruch 1, bei dem jede Außenlage unterschiedlich gefärbte Fasern aufweist.

3. Mehrlagiges Tissuepapierprodukt nach Anspruch 1 oder 2, bei dem in beiden Außenlagen gefärbte Fasern vorhanden sind, die mit dem gleichen Farbstoff gefärbt sind und in einer der Außenlagen mehr gefärbte Fasern vorhanden sind als in der anderen Außenlage.

4. Mehrlagiges Tissuepapierprodukt nach Anspruch 1, bei dem die gefärbten Fasern Ausschussfasern oder recycelte Fasern sind.

5. Mehrlagiges Tissuepapierprodukt nach Anspruch 1, bei dem die gefärbten Fasern lange Fasern in einem Bereich von mehr als 6 mm oder 10 mm sind.

6. Mehrlagiges Tissuepapierprodukt nach Anspruch 1, bei dem die gefärbten Fasern von gleicher oder unterschiedlicher Art sind wie die Hauptfasern.

7. Mehrlagiges Tissuepapierprodukt nach Anspruch 1, bei dem die gefärbten Fasern ungebleichte Fasern sind.

8. Verfahren zum Herstellen eines mehrlagigen Tissuepapierprodukts nach Anspruch 1, wobei das Verfahren die Schritte umfasst:
- Färben der Fasern durch Zumischen von Farbstoff zu einer Fasermasse,
- Zumischen einiger dieser gefärbten Fasern in die Faserlösung, die einer Tissuepapiermaschine zuzuführen ist,
- Erstellen einer Papierlage in der Papiermaschine, und
- Kombinieren dieser gefärbten Papierlage mit einer anderen Papierlage in einer Convertingmaschine, wobei die Lagen auf unterschiedliche Art hergestellt sind oder unterschiedliche Tissuepapiere verwendet werden.

## Revendications

1. Produit en papier absorbant multicouche comprenant au moins deux couches collées de papier absorbant, dans lequel une première couche extérieure est produite de manière différente ou en utilisant un papier absorbant différent de la deuxième couche extérieure pour obtenir une propriété différente de celle de la deuxième couche extérieure afin que le produit en papier absorbant puisse être utilisé dans des applications différentes, lesdites couches contenant des fibres de cellulose, dans lequel dans au moins l'une des couches extérieures, une partie des fibres est colorée.

2. Produit en papier absorbant multicouche selon la revendication 1, dans lequel chaque nappe extérieure a des fibres colorées différentes.

3. Produit en papier absorbant multicouche selon la revendication 1 ou 2, dans lequel, dans les deux couches extérieures, sont présentes des fibres colorées avec le même colorant, et dans l'une des couches extérieures, il y a plus de fibres colorées que dans l'autre couche extérieure.

4. Produit en papier absorbant multicouche selon la revendication 1, dans lequel les fibres colorées sont des fibres de rebut ou recyclées.

5. Produit en papier absorbant multicouche selon la revendication 1, dans lequel les fibres colorées sont des fibres longues, comme des fibres supérieures à 6 mm ou 10 mm.

6. Produit en papier absorbant multicouche selon la revendication 1, dans lequel les fibres colorées sont de même type ou de types différents des fibres principales.

7. Produit en papier absorbant multicouche selon la revendication 1, dans lequel les fibres colorées sont des fibres écrues.

8. Procédé de fabrication d'un produit en papier absorbant multicouche selon la revendication 1, le procédé comprenant les étapes consistant à :
- colorer des fibres en mélangeant un colorant dans une masse de fibres,
- mélanger une partie de ces fibres colorées à la suspension de fibres à transmettre à une machine de fabrication de papier absorbant,
- fabriquer une couche de papier dans la machine à papier et
- associer cette couche de papier coloré avec une autre couche de papier dans une machine de conversion, où les couches sont produites d'une manière différente ou bien des papiers absorbants différents sont utilisés.
